(19) Europäisches Patentamt

European Patent Office

Office européen des brevets

(11) Veröffentlichungsnummer: **0 329 853 B1**

(12) **EUROPÄISCHE PATENTSCHRIFT**

(45) Veröffentlichungstag der Patentschrift: **06.05.92**

(21) Anmeldenummer: **88121621.2**

(22) Anmeldetag: **23.12.88**

(51) Int. Cl.⁵: **F16B 13/12**, F16B 13/08, F16B 13/00

(54) **Einschlaganker.**

(30) Priorität: **26.02.88 DE 3806115**

(43) Veröffentlichungstag der Anmeldung:
**30.08.89 Patentblatt 89/35**

(45) Bekanntmachung des Hinweises auf die
Patenterteilung:
**06.05.92 Patentblatt 92/19**

(84) Benannte Vertragsstaaten:
**AT BE CH ES FR GB IT LI NL**

(56) Entgegenhaltungen:
**CH-A- 503 209**
**DE-A- 3 315 451**

(73) Patentinhaber: **fischerwerke Artur Fischer
GmbH & Co. KG
Weinhalde 14 - 18
W-7244 Waldachtal 3/Tumlingen(DE)**

(72) Erfinder: **Fischer, Artur, Prof. Dr. h.c.
Weinhalde 34
W-7244 Waldachtal 3/Tumblingen(DE)**

(74) Vertreter: **Ott, Elmar, Dipl.-Ing.
fischerwerke Artur Fischer GmbH & Co KG
Weinhalde 14-18
W-7244 Waldachtal 3/Tumlingen(DE)**

**Beschreibung**

Die Erfindung betrifft einen Einschlaganker gemäß der Gattung des Hauptanspruchs.

Aus der DE-OS 33 15 451 ist ein Einschlaganker bekannt, der einen sich am Bohrlochgrund abstützenden Spreizkörper hat, auf den beim Einschlagen des Einschlagankers eine Spreizhülse auftreibbar ist. Damit die Spreizhülse sich aufweiten kann muß zuvor das Bohrloch am Bohrlochgrund mit einer Hinterschneidung versehen werden. Bei einem geraden Bohrloch würde sich der abstehende Rand der den Spreizkörper umschließenden Spreizhülse gegen die Bohrlochwand gepreßt. Ein Aufspreizen entlang der konischen Fläche des Spreizkörpers wäre somit nicht möglich.

Der Erfindung liegt die Aufgabe zugrunde, einen Einschlaganker zu schaffen, der sowohl in hinterschnittene Bohrlöcher als auch in gerade Bohrlöcher eines Mauerwerks formschlüssig einsetzbar ist.

Die Lösung dieser Aufgabe wird bei einem Einschlaganker der eingangs genannten Gattung durch die im kennzeichnenden Teil des Hauptanspruchs angegebenen Merkmale erhalten. Durch die Verwendung einer Platte mit schmalen Seitenrändern, welche die Spreizflächen bilden, gräbt sich die Platte mit den Seitenrändern beim Einschlagen des Einschlagankers in einem geraden Bohrloch eine entsprechend schmale Hinterschneidung. Die Platte kann im Bereich der Seitenränder auch gehärtet oder mit Kerben oder Spitzen versehen sein, die je nach Anwendungsbereich das Einschlagen und Einbringen der Hinterschneidung begünstigen. Für den Einsatz in konisch hinterschnittenen Bohrlöchern ist der erfindungsgemäße Einschlaganker ebenfalls problemlos verwendbar. Die Spreizflächen werden von einem sehr einfachen Element gebildet, welches ein Stanzteil sein kann.

Vorzugsweise besitzt die Platte eine keulenförmig ausgebildete Aussparung, an deren offener Schmalstelle der Spreizkörper angreift. Beim Einschlagen des Einschlagankers dringt der Spreizkörper in die Aussparung ein und drückt dabei die seitlichen, die Aussparung begrenzenden Schenkel V-förmig nach außen. Die Aussparungsränder, welche am Spreizkörper anliegen, sind dann parallel ausgerichtet, wodurch der Spreizkörper sicher fixiert wird. Ein von den seitlichen Schenkeln auf den in die Aussparung eingeschlagenen Spreizkörper ausgeübter Druck verklemmt diesen sicher in dieser Position.

Die Platte kann in einen Längsschlitz eines hülsenförmigen Endes des Ankerschaftes eingesetzt und dort fixiert sein oder sie kann mit einem aus Flachstahl hergestellten Ankerschaft ein einstückiges Teil bilden. Ein socher Flachstahlanker ist im Aufbau äußerst einfach und somit sehr kostengünstig herstellbar.

Der Spreizkörper ist vorzugsweise als einseitig geschlitzter Rundstab ausgebildet, in dessen Schlitz Keilflächen angeordnet sind, mit denen die Schenkel der Platte nach außen gespreizt werden. Der Durchmesser des Rundstabes entspricht dabei dem Innendurchmesser des hülsenförmigen Teils des Schaftes, wodurch für den Spreizkörper eine exakte Führung erhalten wird.

Die Erfindung wird nachfolgend anhand der Zeichnung näher erläutert.

Es zeigen:

Figur 1 und Figur 2
zwei Ansichten eines Ausführungsbeispiels eines Einschlagankers,

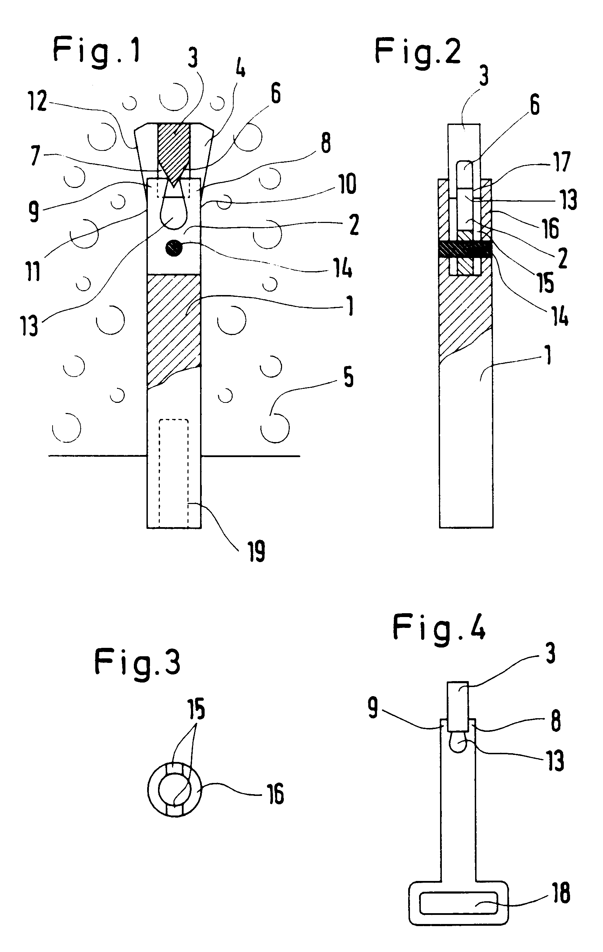

Figur 3
die Stirnseite des hülsenförmigen Schaftteils des Einschlagankers gemäß Figur 1 und 2 und

Figur 4
ein weiteres Ausführungsbeispiel eines Einschlagankers aus Flachstahl.

Der in den Figuren 1 und 2 dargestellte Einschlaganker besteht aus einem Schaft 1, einer Platte 2 und einem Spreizkörper 3. Der Einschlaganker befindet sich in einem hinterschnittenen Bohrloch 4 eines Mauerwerks 5 in der Position, wo der Spreizvorgang beginnt. Wird der Einschlaganker weiter in das Bohrloch 4 eingetrieben, so bleibt der Spreizkörper 3, welcher am Bohrlochgrund anliegt, in der dargestellten Position, während am Spreizkörper3 ausgebildete Keilflächen 6, 7 an der Platte 2 ausgebildete Schenkel 8, 9 seitlich wegdrücken. Deren Seitenränder 10, 11 legen sich dabei an die konische Bohrlochwand im Bereich der Hinterschneidung 12 an.

Die Platte 2 besteht aus einem flachen Stanzteil und besitzt eine keulenförmige Aussparung 13, an deren offener Schmalseite die Keilflächen 6, 7 des Spreizkörpers 3 angreifen. Die Platte 2 ist mittels eines Stiftes 14 am Schaft 1 befestigt.

In Figur 2 ist ersichtlich, daß die Platte 2 in einen Schlitz 15 eines hülsenförmigen Teils 16 des Schaftes 1 eingesetzt ist. Die Zeichnung zeigt weiterhin, daß der Spreizkörper 3 einen Schlitz 17 besitzt, in welchem die Keilflächen 6, 7 zu einer Spitze zulaufen.

In Figur 3 ist die Stirnseite des hülsenförmigen Teils 16 mit dem Längsschlitz 15 dargestellt.

Bei dem in Figur 4 dargestellten Ausführungsbeispiel ist der Schaft und die Platte mit Aussparungen 13 als einstückiges Teil ausgebildet.

Als Befestigungselement besitzt der Einschlaganker gemäß Figur 4 eine Öse 18, während der Einschlaganker gemäß Figur 1 und 2 ein Innengewinde 19 hat. Ebenso wie beim Einschlaganker gemäß Figur 1 und 2 ist auch bei dem in Figur 4 dargestellten Einschlaganker ein als geschlitzter Rundstab ausgebildeter Spreizkörper 3 mit Keilflächen vorgesehen. Durch die Keulenform der Aussparung 13 verjüngen sich die seitlichen Schenkel 8, 9 an der breitesten Stelle der Aussparung 13, so daß hier der Biegebereich für das Aufbiegen der Schenkel 8, 9 liegt.

Es wird noch angemerkt, daß die Seitenränder 10, 11, welche die äußeren Spreizflächen bilden, Kerben, Vorsprünge oder Spitzen aufweisen können, die je nach Anwendungsfall das Aufspreizen erleichtern und eine bessere Verankerung mit sich bringen können.

## Patentansprüche

1. Einschlaganker zum Einschlagen in Bohrlöcher eines Mauerwerks mit Spreizflächen und einem am Bohrlochgrund aufsetzbaren Spreizkörper, der beim Einschlagen in den Schaft des Einschlagankers eindringt und die Spreizflächen aufspreizt, **dadurch gekennzeichnet**, daß eine am Schaftende ausgebildete Platte (2) mit ihren Seitenrändern (10, 11) die Spreizflächen bildet, und daß die Platte (2) zwischen den Seitenrändern (10, 11) eine Aussparung (13) hat, in die der Spreizkörper (3) mit Keilflächen (6, 7) eingreift.

2. Einschlaganker nach Anspruch 1, **dadurch gekennzeichnet**, daß die Aussparung (13) keulenförmig ausgebildet ist und ihre Schmalstelle an dem dem Spreizkörper (3) zugewandten Ende hat.

3. Einschlaganker nach einem der Ansprüche 1 oder 2, **dadurch gekennzeichnet**, daß die Platte (2) in einem Längsschlitz (15) eines hülsenförmigen Abschnitts (16) des Schaftes eingesetzt und durch einen Querstift (14) oder dergleichen mit dem Schaft (1) verbunden ist.

4. Einschlaganker nach einem der Ansprüche 1 oder 2, **dadurch gekennzeichnet**, daß der Schaft (1) aus einem Flachstahl besteht, dessen Ende die Platte mit Spreizflächen bildet.

5. Einschlaganker nach einem der vorhergehenden Ansprüche, **dadurch gekennzeichnet**, daß der Spreizkörper (3) ein einseitig geschlitzter Rundstab ist, in dessen Schlitz (17) die Keilflächen (6, 7) angeordnet sind und in den die Platte (2) eingreift, wobei die Spitze der Keilflächen (6, 7) in die Aussparung (13) der Platte (2) ragt.

## Claims

1. Hammer-in anchor for hammering into drilled holes in masonry, having expansible surfaces and an expander member that can be placed at the base of the drilled hole and that penetrates the shaft of the hammer-in anchor when it is hammered in and causes the expansible surfaces to expand, characterised in that the side edges (10, 11) of a plate (2) formed at the end of the shaft form the expansible surfaces and that between its side edges (10, 11) the plate (2) has a recess (13) which is engaged by tapering surfaces (6, 7) of the expander member (3).

2. Hammer-in anchor according to claim 1, characterised in that the recess (13) is obovate and has its narrow portion at the end facing the expander member (3).

3. Hammer-in anchor according to claim 1 or 2, characterised in that the plate (2) is inserted in a longitudinal slot (15) in a sleeve-like portion (16) of the shaft and is connected by a transverse pin (14) or the like to the shaft (1).

4. Hammer-in anchor according to claim 1 or 2, characterised in that the shaft (1) consists of flat steel the end of which forms the plate having expansible surfaces.

5. Hammer-in anchor according to one of the preceding claims, characterised in that the expander member (3) is a round rod slotted at one side, in the slot (17) of which the tapering surfaces (6, 7) are arranged and which the plate (2) engages, the point of the tapering surfaces (6, 7) projecting into the recess (13) in the plate (2).

## Revendications

1. Dispositif ou boulon d'ancrage par enfoncement, destiné à être enfoncé dans des trous forés d'un ouvrage de maçonnerie comportant des surfaces d'expansion et un corps d'expansion susceptible d'être mis en place sur le fond du trou foré, qui, lors de l'enfoncement pénètre dans la tige du dispositif ou boulon d'ancrage par enfoncement et écarte de force les surfaces d'expansion, caractérisé par le fait qu'une plaque (2), formée à l'extrémité de la tige, réalise les surfaces d'expansion au moyen de ses bords latéraux (10, 11), et que la plaque (2) comporte, entre les bords latéraux (10, 11), un évidement (13), dans lequel le corps (3) d'expansion attaque au moyen des surfaces en coin (6, 7).

2. Dispositif ou boulon d'ancrage par enfoncement selon la revendication 1, caractérisé par le fait que l'évidement (13) a une forme de lobe et que sa partie étroite est située à l'extrémité orientée vers le corps (3) d'expansion.

3. Dispositif ou boulon d'ancrage par enfoncement selon une des revendications 1 ou 2, caractérisé par le fait que la plaque (2) est mise en place dans une fente longitudinale (15) d'une partie (16) en forme de douille de la tige et est reliée à la tige (1) par une cheville (14) transversale ou par un moyen similaire.

4. Dispositif ou boulon d'ancrage par enfoncement selon la revendication 1 ou 2, caractérisé par le fait que la tige (1) est constituée par une pièce d'acier plat, dont l'extrémité forme la plaque comportant des surfaces d'expansion.

5. Dispositif ou boulon d'ancrage par enfoncement selon une des revendications précédentes, caractérisé par le fait que le corps (3) d'expansion est une tige ronde fendue d'un côté, dans la fente (17) de laquelle sont disposées les surfaces (6, 7) en forme de coin et dans laquelle pénètre la plaque (2), la pointe des surfaces en coin (6, 7) dépassant dans l'évidement (13) de la plaque (2).

Fig.1

Fig.2

Fig.3

Fig.4